# DEMANDE DE BREVET EUROPEEN

(11) **EP 3 964 043 A1**
(43) Date de publication de la demande: **09.03.2022**
(21) Numéro de dépôt: 21194237.0
(22) Date de dépôt: 01.09.2021
(51) Int. Cl.: A01C 5/06, A01C 7/00

(54) **SEMOIR A CHASSE-DEBRIS**

(30) Priorité: 02.09.2020 FR 2008897
(71) Demandeur: Carbure Technologies SAS, 49490 Noyant-Villages (FR)
(72) Inventeur: DUMOULIN, Tom, 49400 Saumur (FR)
(74) Mandataire: Nony

(57) **Abrégé**

Semoir comportant :
- un support (12) ;
- une lame chasse-débris (13) montée sur le support et conformée pour ménager dans le sol (S), lorsque, dans une position de service, le support est tracté sur le sol (S) par un engin agricole selon une direction d'avancement (A), une fente superficielle (Fₛ) présentant une largeur (ls) inférieure à 20 mm ;
- un disque ouvreur (14) s'étendant dans un plan de disque ouvreur (P₁₄), monté à rotation sur le support autour d'un axe X et conformé pour approfondir ladite fente superficielle (Fₛ) ;
- une descente de semoir (18) rigidement fixée sur le support et débouchant vers ou dans la fente superficielle approfondie par le disque ouvreur (14) ;
semoir dans lequel la lame chasse-débris (13) comporte un bord d'attaque (15ₐ), un bord de fuite (15₂) et un bord inférieur (15₃) reliant le bord d'attaque et le bord de fuite, le bord de fuite (15₂) comportant une portion adjacente au bord périphérique du disque ouvreur et qui, en tout point le long de ladite portion adjacente (15_{b}) est, dans au moins une position angulaire du disque ouvreur, écartée du bord périphérique du disque ouvreur, d'une distance (Δ) inférieure à 70 mm.

## Description

### Domaine technique

La présente invention concerne un semoir destiné à être fixé sur un engin agricole. Un tel semoir est destiné à disposer un composé, en particulier une graine ou un engrais, dans la terre. L'invention concerne aussi un procédé de semage mettant en œuvre un tel semoir.

### Art antérieur

Les semoirs à soc bouleversent la terre et bourrent lorsqu'il y a trop de débris végétaux sur le sol.

Alternativement, FR 3 070 233 divulgue un semoir à disque ouvreur. Un tel semoir comporte un disque ouvreur qui vient découper la terre et ainsi créer une fente, et une descente de semoir au moyen de laquelle le composé est déposé dans la fente. La terre n'est donc pas bouleversée, ce qui améliore considérablement la germination. La consommation d'énergie en est également réduite.

Cependant, avec un tel semoir, des débris végétaux, par exemple de la paille, peuvent s'accumuler devant le disque ouvreur et entraver son action.

Pour limiter cette accumulation, on connaît des chasse-débris rotatifs comportant des roues étoilées qui roulent devant le disque ouvreur et chassent latéralement les débris végétaux sur le sol. L'efficacité est cependant limitée, l'interaction avec le sol n'étant pas permanente.

On connaît également de la demande FR 1 905 499 un semoir qui comporte une roulette de pincement qui plaque les débris végétaux contre le sol, devant le disque ouvreur. Ainsi retenus, les débris végétaux peuvent être plus facilement écartés latéralement.

Il existe un besoin permanent pour un nouveau semoir qui ne bouleverse pas la terre et évite l'accumulation de débris végétaux devant le disque ouvreur.

### Résumé de l'invention

L'invention propose un semoir comportant :
- un support ;
- une lame chasse-débris montée sur le support et conformée pour ménager dans le sol, lorsque, dans une position de service, le support est tracté sur le sol par un engin agricole selon une direction d'avancement, une fente superficielle présentant une largeur inférieure à 20 mm ;

- un disque ouvreur s'étendant dans un plan de disque ouvreur, monté à rotation sur le support autour d'un axe X et conformé pour approfondir ladite fente superficielle ;
- une descente de semoir rigidement fixée sur le support et débouchant vers ou dans la fente superficielle approfondie par le disque ouvreur ;
semoir dans lequel la lame chasse-débris comporte un bord d'attaque, un bord de fuite et un bord inférieur reliant le bord d'attaque et le bord de fuite, le bord de fuite comportant une portion adjacente au bord périphérique du disque ouvreur et qui, en tout point le long de ladite portion adjacente, est, dans au moins une position angulaire du disque ouvreur, de préférence dans toute position angulaire du disque ouvreur, écartée du bord périphérique du disque ouvreur, d'une distance inférieure à 70 mm, de préférence inférieure à 50 mm, de préférence inférieure à 30 mm, de préférence inférieure à 20 mm.

Comme on le verra plus en détail dans la suite de la description, à la différence d'un chasse-débris rotatif, la lame chasse-débris a une action permanente d'écartement latéral des débris végétaux. Cependant, son épaisseur réduite évite tout bouleversement du sol. Enfin, la proximité de son bord de fuite avec le disque ouvreur limite avantageusement le risque d'un retour élastique des débris végétaux écartés devant le disque ouvreur.

Un semoir selon l'invention peut également comporter une ou plusieurs des caractéristiques optionnelles suivantes :
- ladite portion adjacente s'étend sur un secteur angulaire, autour de l'axe X, supérieur à 10° ;
- ladite portion adjacente s'étend, dans la position de service, en partie au dessus et en partie en dessous du niveau du sol, de préférence au moins 1 cm, de préférence au moins de 2 cm, au-dessus et en dessous du niveau du sol ;
- le disque ouvreur présente une épaisseur inférieure à 0,9 de préférence inférieure à 0,8, de préférence inférieure à 0,7, voire inférieure à 0,5, à 0,3, à 0,2 ou à 0,1, et/ou de préférence supérieure à 0,05 fois la largeur de la fente superficielle ménagée par la lame chasse-débris ;
- le semoir comporte une butée, rigidement solidaire de la lame chasse-débris, de préférence disposée de manière à être au-dessus du niveau du sol dans la position de service, de préférence à plus de 1cm, de préférence à plus de 2 cm au-dessus du niveau du sol, ladite butée s'étendant face à une grande face du disque ouvreur, à une distance de ladite grande face inférieure à 5 mm ;
- la lame chasse-débris présente, au moins entre le bord d'attaque et ladite portion adjacente, de préférence en tout point, la forme d'une plaque dépourvue d'orifice traversant ;
- le bord inférieur présente une échancrure conformée pour que, dans la position de service, moins de 50% de la longueur du bord inférieur soit en contact avec le fond de la fente superficielle ;
- la lame chasse-débris s'étend dans un plan de lame formant avec le plan de disque ouvreur un angle β supérieur à 2° et inférieur à 30°, ou un angle nul ;
- le disque ouvreur et la lame chasse-débris sont montés sur un même bras de soutien du support ;
- la lame chasse-débris est fixée rigidement sur le support ou est montée mobile sur le support de manière à exercer un appui sur le sol dans la position de service ;
- la position de la lame chasse-débris est réglable selon la direction d'avancement et/ou perpendiculairement à la direction d'avancement ;
- dans la position de service, le bord d'attaque est incliné vers l'arrière, formant un angle supérieur à 5° avec un plan horizontal ;
- le semoir comporte un coutre apte à élargir ladite fente superficielle approfondie par le disque ouvreur, de préférence interposé entre le disque ouvreur et la descente de semoir ;
- le disque ouvreur et la descente de semoir, voire le coutre, s'étendent sensiblement dans un plan commun, de préférence vertical ;
- le coutre peut s'étendre derrière le disque ouvreur ou, de préférence, contre une grande face du disque ouvreur ;
- le semoir comporte de préférence une roue de fermeture, destinée à refermer la fente après l'introduction d'un composé au moyen de la descente de semoir, la descente de semoir étant de préférence interposée entre le coutre et la roue de fermeture.

L'invention concerne également un procédé de semage dans lequel on tracte un semoir selon l'invention sur le sol, dans la position de service et selon la direction d'avancement, de manière que :
- la lame chasse ménage dans une fente superficielle présentant une largeur inférieure à 20 mm, en dégageant latéralement des débris végétaux qui s'étendraient sur le trajet du disque ouvreur ;
- le disque ouvreur tourne autour de l'axe X et incise le fond de la fente superficielle, de manière à l'approfondir ;
- un composé, en particulier des graines, transite par la descente de semoir pour être déposé dans la fente superficielle ainsi approfondie.

### Brève description des figures

D'autres caractéristiques et avantages de l'invention apparaitront encore à la lecture de la description détaillée qui va suivre et à l'examen des planches de figures dans lesquelles :
[fig 1] représente schématiquement, vu de côté et vu de dessus, un semoir selon un exemple de réalisation de l'invention ;
[fig 2] représente un détail d'un semoir selon l'invention vu de côté (A) et de devant (B), dans un premier mode de réalisation ;
[fig 3] représente un détail d'un semoir selon l'invention vu de côté (A) et de devant (B), dans un deuxième mode de réalisation ;
[fig 4] représente un détail d'un semoir selon l'invention vu de côté (A), de devant (B) et en perspective ((C) et (D)), dans un troisième mode de réalisation ;
[fig 5] représente un détail d'un semoir selon l'invention vu de côté (A), de devant (B) et en perspective ((C) et (D)), dans un quatrième mode de réalisation ;
[fig 6] représente un détail d'un semoir selon l'invention vu de côté (A), de devant (B) et en perspective ((C) et (D)), dans un cinquième mode de réalisation ;
[fig 7] représente un détail d'un semoir selon l'invention vu de côté (A) et de devant (B), dans un sixième mode de réalisation ;
[fig 8] représente les fentes ménagées dans le sol lors du passage de la lame chasse-débris puis du disque ouvreur, vues de dessus (A) et de côté (B), les flèches pointant vers des sections transversales correspondantes ;
[fig 9] représente vu de côté, un détail d'un semoir selon l'invention comportant un organe de rappel élastique dans un premier mode de réalisation ; et
[fig 10] représente vu de côté, un détail d'un semoir selon l'invention comportant un organe de rappel élastique dans un deuxième mode de réalisation.

### Définitions

La « position de service » est classiquement la position dans laquelle le semoir est tiré par un engin agricole, classiquement un tracteur, sur un sol sensiblement horizontal, en particulier de manière à semer des graines dans le sol. Le sol est considéré comme suffisamment ferme pour éviter l'enfoncement des pièces prévues pour y prendre appui comme les roues de fermeture. Sauf indication contraire, le semoir est décrit dans la position de service.

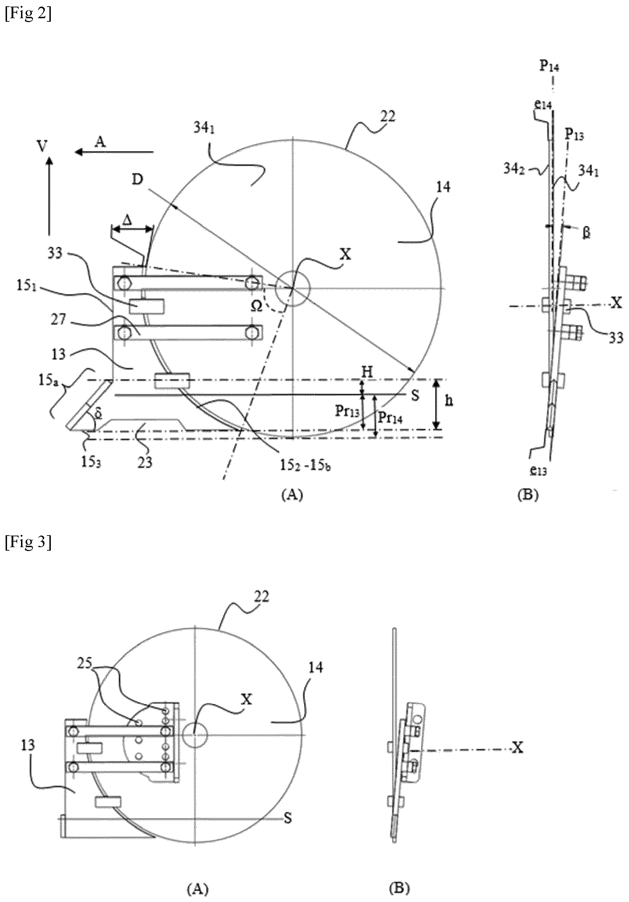

La direction d'avancement ou « direction longitudinale » est la direction orientée A (figure 2) selon laquelle le semoir est prévu pour être tracté dans la position de service.

Un plan longitudinal est un plan vertical parallèle à la direction d'avancement.

La flèche référencée « V » est verticale et pointe vers le haut.

Un plan transversal est un plan perpendiculaire à la direction d'avancement A.

Une direction « transversale » est une direction horizontale et dans un plan transversal. Sauf indication contraire, les épaisseurs sont mesurées selon une direction transversale. Une distance ou une dimension « transversales » sont mesurées selon une direction transversale. Un dégagement « latéral » d'un débris végétal est un dégagement au moins partiellement selon une direction transversale.

Dans la présente description, les adjectifs « inférieur », « supérieur », « horizontal », « vertical », « devant », « derrière », « avant », « arrière », « droite », « gauche » et « latéral » sont définis par rapport à la direction d'avancement (la flèche A pointe donc vers « l'avant »).

Une pièce est « fixée » sur une autre pièce lorsqu'elle est rigidement fixée sur cette dernière ou que les déplacements possibles sont guidés. La fixation peut être directe ou par l'intermédiaire d'une ou plusieurs autres pièces, par exemple par l'intermédiaire d'un adaptateur.

Les adjectifs « superficiel » et « principal » sont utilisés à des fins de clarté seulement, pour distinguer les fentes créée par la lame chasse-débris, puis approfondie par le disque ouvreur, respectivement.

Il faut interpréter les verbes "comprendre " ou "comporter " ou "présenter " de manière non restrictive, sauf indication contraire.

### Description détaillée

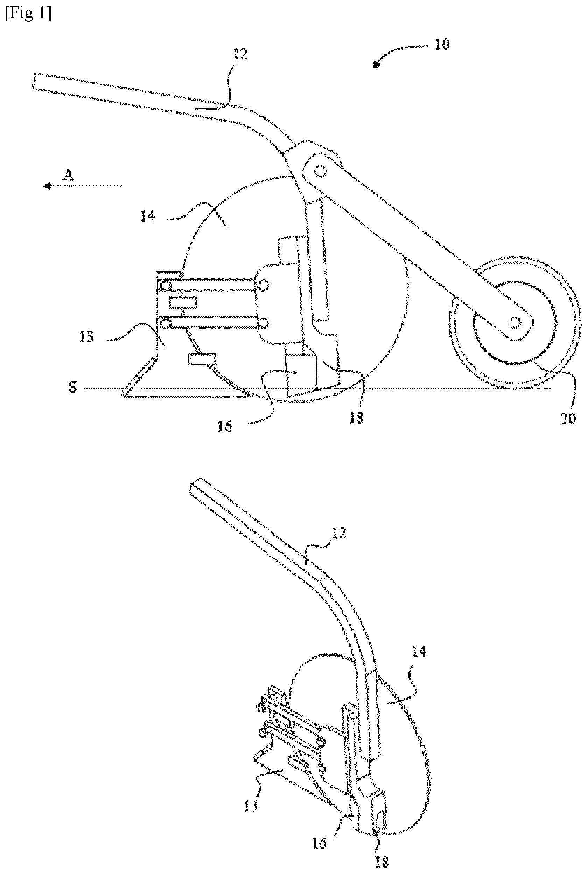

Comme représenté sur la figure 1, dans un mode de réalisation préféré, un semoir 10 selon l'invention comporte un support 12 destiné à être fixé à un engin agricole et sur lequel sont successivement montés, depuis l'avant vers l'arrière, une lame chasse-débris 13, un disque ouvreur 14, un coutre 16, une descente de semoir 18, et une roue de fermeture 20.

Dans un mode de réalisation, la lame chasse-débris 13, le disque ouvreur 14, le coutre 16, la descente de semoir 18 et la roue de fermeture 20 s'étendent sensiblement dans un plan commun, de préférence vertical.

De préférence, le coutre 16 et la descente de semoir 18 sont contre une grande face du disque ouvreur 14, comme représenté sur la figure 1.

La lame chasse-débris 13 est destinée, en position de service et quand le semoir est tracté selon la direction d'avancement, à former une fente superficielle Fₛ dans le sol S.

Le disque ouvreur 14 est destiné, en position de service et quand le semoir est tracté selon la direction d'avancement, à approfondir la fente superficielle pour former une fente principale Fₚ dans le sol. Le coutre 16, optionnel, est destiné à bien dégager la terre devant la descente de semoir 18, et de préférence à élargir la fente principale. La descente de semoir 18 est destinée à guider un composé, classiquement des graines, jusqu'au fond de la fente principale. De préférence, elle est introduite dans la fente principale de manière à déboucher à proximité du fond de la fente principale. La roue de fermeture 20 est destinée à refermer la fente principale après que le composé y a été déposé. De préférence, la roue de fermeture est maintenue contre le sol par un organe de poussée élastique, non représenté.

De préférence, les différentes pièces du semoir comportent, voire sont constituées en un acier à haute limite élastique, ou « HLE », ou en inox. Ces pièces peuvent être renforcées localement avec du carbure de tungstène et/ou de la soudure anti-abrasion.

### Support

Le support 12, qui peut être constitué par une ou plusieurs pièces, est la structure sur laquelle sont montés la lame chasse-débris 13, le disque ouvreur 14, le coutre 16, la descente de semoir 18 et la roue de fermeture 20. Il comporte classiquement une attache de fixation à un engin agricole, classiquement un tracteur.

### Disque ouvreur

Le disque ouvreur 14 est de préférence de forme générale discoïdale afin d'assurer l'ouverture d'une fente principale continue. Il est monté à rotation, de préférence libre, sur le support 12, autour d'un axe transversal horizontal X. Dans un mode de réalisation, il s'étend dans un plan sensiblement vertical, ce qui facilite sa pénétration dans la terre.

Dans un mode de réalisation non représenté, son axe X de rotation est incliné, par rapport à un plan horizontal, d'un angle supérieur à 3°, supérieur à 5°, supérieur à 6°, et/ou inférieur à 15°, inférieur à 10°, de préférence inférieur à 9°, de préférence inférieur à 8°. Les performances pour découper les débris végétaux sur le sol en sont améliorées.

Le disque ouvreur 14 présente de préférence un diamètre D supérieur à 10 cm, supérieur à 20 cm, supérieur à 30 cm, supérieur à 40 cm, voire supérieur à 50 cm, supérieur à 60 cm, voire supérieur à 100 cm, et/ou inférieur à 250 cm, à 200 cm ou à 150 cm, un diamètre de 43 cm étant préféré.

L'épaisseur e₁₄ du disque ouvreur 14 est de préférence inférieure à 20 mm, de préférence inférieure à 15 mm, de préférence inférieure à 10 mm, de préférence inférieure à 8 mm, et/ou supérieure à 3 mm, de préférence supérieure à 5 mm.

De préférence encore, le bord périphérique 22 du disque ouvreur 14 est effilé.

Le bord périphérique 22 du disque ouvreur 14 est de préférence circulaire.

Dans un mode de réalisation non représenté, il comporte une pluralité de créneaux, de préférence équi-angulairement répartis autour de l'axe X. De préférence encore, deux créneaux successifs sont séparés d'une distance supérieure à 10 mm, de préférence supérieure à 30 mm, de préférence supérieure à 50 mm et/ou inférieure à 250 mm, de préférence inférieure à 200 mm.

Les créneaux sont de préférence sensiblement circulaires et présentent, de préférence encore, une profondeur supérieure à 5 mm, de préférence supérieure à 10 mm, de préférence encore supérieure à 20 mm et/ou inférieure à 50 mm.

Les créneaux permettent avantageusement un cisaillement de la terre particulièrement efficace. Ils conduisent cependant le bord périphérique 22 à s'écarter du bord de fuite de la lame chasse-débris 13, ce qui nuit à l'efficacité de la lame chasse-débris 13.

Dans un mode de réalisation préféré, le disque ouvreur est pourvu d'un limiteur de profondeur, non représenté, empêchant mécaniquement l'enfoncement du disque ouvreur au-delà d'une profondeur maximale prédéfinie.

La profondeur maximale dépend classiquement du diamètre du disque ouvreur. Pour un diamètre de 300 mm, elle est classiquement comprise entre 10 et 60 mm. Pour un diamètre de 620 mm, elle est classiquement comprise entre 10 et 200 mm.

La profondeur maximale est de préférence supérieure à 0,5 cm, de préférence supérieure à 1 cm, de préférence supérieure à 2 cm, voire supérieure à 5 cm, ou supérieure à 7 cm, et/ou de préférence inférieure à 15 cm, de préférence inférieure à 13 cm, de préférence inférieure à 10 cm, de préférence inférieure à 8 cm, une profondeur maximale de 3 cm étant bien adaptée.

Le limiteur de profondeur comporte de préférence une ceinture, sensiblement cylindrique de base circulaire et d'axe X. La largeur de la ceinture, mesurée selon l'axe X, est de préférence supérieure à 1 cm, de préférence supérieure à 2 cm, de préférence supérieure à 3 cm, de préférence supérieure à 4 cm et/ou de préférence inférieure à 50 cm, de préférence inférieure à 30 cm, de préférence inférieure à 20 cm, de préférence inférieure à 10 cm, de préférence inférieure à 8 cm. De préférence, la ceinture est soudée sur une des deux grandes faces du disque ouvreur.

### Lame chasse-débris

La lame chasse-débris 13 présente la forme générale d'une plaque sensiblement plane, de préférence d'épaisseur constante. Une telle plaque est avantageusement rapide à fabriquer, rigide et résistante à l'abrasion.

La lame chasse-débris 13 s'étend dans un plan de lame P₁₃ qui forme avec le plan du disque ouvreur P₁₄ un angle β (voir figure 2) inférieur à 30°, de préférence inférieur à 20°, de préférence inférieur à 15°, de préférence inférieur à 10°, de préférence inférieur à 5°, de préférence sensiblement nul.

Dans un mode de réalisation, comme représenté, l'angle β est supérieur à 1°, ou à 2°.

La lame chasse-débris 13 est disposée devant le disque, sensiblement dans le plan du disque ouvreur, de manière que, lorsque le semoir est observé vu de devant (voir figure 2(B)), elle masque partiellement le disque ouvreur, au moins au niveau des débris végétaux qui jonchent le sol S. Lorsque le plan de lame est confondu avec le plan de disque ouvreur, la surface de la zone de masquage est avantageusement maximale.

Pour la même raison, la lame chasse-débris 13 présente de préférence une épaisseur e₁₃ supérieure à l'épaisseur e₁₄ du disque ouvreur. De préférence, le rapport de l'épaisseur du disque ouvreur sur l'épaisseur de la lame chasse-débris 13, e₁₄/ e₁₃, est inférieur à 0,9, de préférence inférieur à 0,8, de préférence inférieur à 0,7, voire inférieur à 0,5, à 0,3, à 0,2 ou à 0,1, et/ou de préférence supérieur à 0,05.

Cependant, il est nécessaire de limiter le bouleversement de la terre au passage de la lame chasse-débris 13. La lame chasse-débris 13 présente donc une épaisseur e₁₃ inférieure à 20 mm, de préférence inférieure à 15 mm, de préférence inférieure à 12 mm, de préférence inférieure à 11 mm. Pour une assurer une bonne rigidité, la lame chasse-débris 13 présente de préférence une épaisseur supérieure à 3 mm, de préférence supérieure à 5 mm, de préférence supérieure à 8 mm, de préférence supérieure à 9 mm.

Le bord périphérique de la lame chasse-débris 13 définit :
- un bord frontal 15₁,
- un bord de fuite 15₂, opposé au bord frontal, et
- un bord inférieur 15₃, qui relie les extrémités inférieures des bords d'attaque et de fuite. Le bord frontal comporte
- un bord d'attaque 15a destiné à entrer en contact avec le sol pour ménager la fente superficielle, et avec les débris végétaux sur le sol, et
- un bord « passif » qui s'étend au-dessus du bord d'attaque.

Le bord d'attaque 15a s'étend de préférence, depuis le bord inférieur, sur une longueur supérieure à 15 mm, de préférence supérieure à 20 mm, de préférence supérieure à 30 mm, de préférence supérieure à 40 mm, de préférence supérieure à 50 mm, de préférence supérieure à 60 mm, et/ou de préférence inférieure à 200 mm, de préférence inférieure à 150 mm, de préférence inférieure à 100 mm.

La hauteur h du bord d'attaque, mesurée selon la direction verticale V, est de préférence supérieure à 10 mm, de préférence supérieure à 20 mm, de préférence supérieure à 30 mm, de préférence supérieure à 40 mm, de préférence supérieure à 50 mm, de préférence supérieure à 60 mm, et/ou de préférence inférieure à 200 mm, de préférence inférieure à 150 mm, de préférence inférieure à 100 mm.

Le bord d'attaque 15a est de préférence configuré pour s'étendre jusqu'à une altitude H, mesurée depuis le sol S, supérieure à 10 mm, de préférence supérieure à 20 mm, de préférence supérieure à 30 mm, de préférence supérieure à 40 mm, de préférence supérieure à 50 mm, de préférence supérieure à 60 mm, de préférence supérieure à 70 mm.

Le bord d'attaque est configuré pour créer une fente superficielle dans le sol, de manière à limiter le glissement de débris végétaux sous la lame chasse-débris 13. La lame chasse-débris 13 est configurée pour, dans la position de service, être en partie dans le sol, sur une profondeur de préférence supérieure à 1 mm, de préférence supérieure à 3 mm, de préférence supérieure à 5 mm, de préférence supérieure à 10 mm, de préférence supérieure à 15 mm.

La lame chasse-débris 13 est de préférence configurée pour, dans la position de service, être en partie dans le sol, sur une profondeur Pr₁₃ inférieure à 100 mm, de préférence inférieure à 90 mm, de préférence inférieure à 80 mm, de préférence inférieure à 40 mm, de préférence inférieure à 30 mm, de préférence inférieure à 25 mm. Cette profondeur, de préférence comprise entre 5 mm et 70 mm, est donc la profondeur de la fente superficielle. Le déplacement de terre est ainsi réduit.

La profondeur de pénétration de la lame chasse-débris 13 dans le sol est de préférence inférieure à la profondeur Pr₁₄ de pénétration du disque ouvreur, le rapport de ces profondeurs Pr₁₃/Pr₁₄ étant de préférence inférieur à 0,95, à 0,9, à 0,8, à 0,7, à 0,6, et de préférence supérieur à 0,05, à 0,1, à 0,2, ou à 0,3.

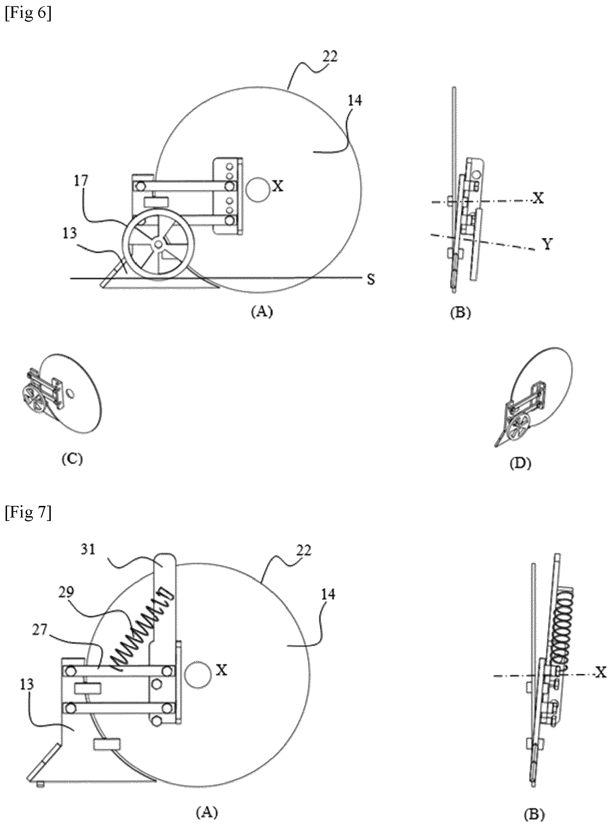

Le semoir peut comporter un limiteur de profondeur pour la fente superficielle, par exemple sous la forme d'une roulette 17 montée à rotation libre autour d'un pivot transversal d'axe Y rigidement solidaire de la lame chasse-débris 13 (figure 6). La hauteur de la roulette 17, de préférence réglable, détermine ainsi la profondeur maximale de la lame chasse-débris 13.

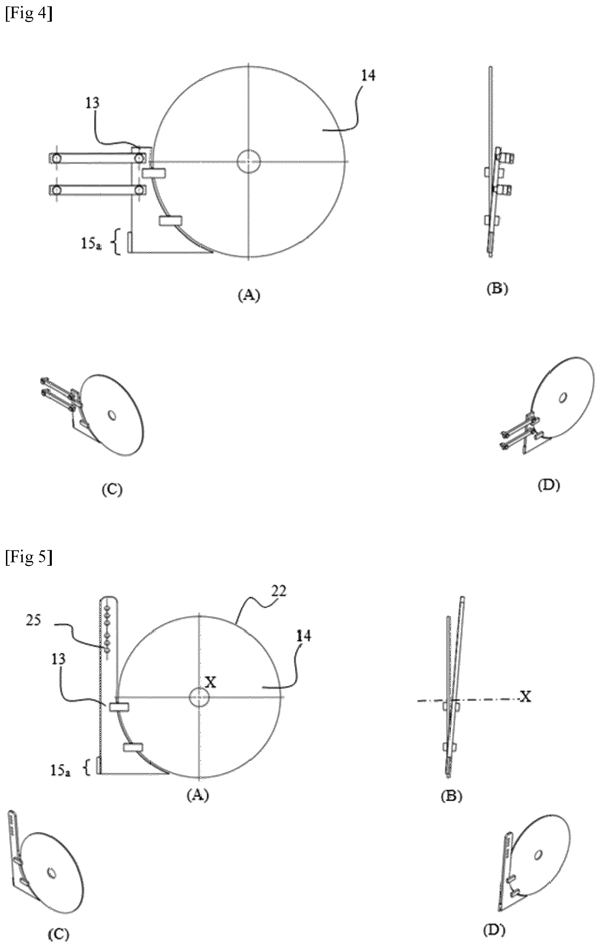

Le bord d'attaque 15a peut être vertical, comme représenté sur les figures 4 et 5. Le bord d'attaque 15a est de préférence incliné vers l'arrière, comme représenté sur la figure 2(A), formant un angle δ avec un plan horizontal de préférence supérieur à 5°, à 10°, à 20°, à 30° et/ou inférieur à 90°, à 80° ou inférieur à 70°. Il permet ainsi de soulever les débris végétaux pour les déterrer avant de les chasser latéralement.

Le bord d'attaque est de préférence effilé pour faciliter son passage dans la terre.

Le bord d'attaque est de préférence renforcé localement, de préférence avec du carbure de tungstène et/ou de la soudure anti-abrasion. Il peut être également défini par une pièce en carbure de tungstène rapportée.

Selon l'invention, au moins une portion du bord de fuite 15₂, dite portion « adjacente » 15_{b}, s'étend à proximité du bord périphérique du disque ouvreur. Cette portion peut représenter toute la longueur du bord de fuite 15₂ (figure 2(A)).

De préférence, la portion adjacente s'étend sur un secteur angulaire Ω, autour de l'axe X, supérieur à 10°, à 30°, à 50 °, à 70°, à 80° et/ou inférieur à 100° (voir figure 2).

Dans la position de service, la longueur de la portion adjacente s'étend au moins dans la région au niveau du sol, de préférence jusqu'à une altitude, mesurée depuis le sol, supérieure à 10 mm, de préférence supérieure à 20 mm, de préférence supérieure à 30 mm, de préférence supérieure à 40 mm, de préférence supérieure à 50 mm, de préférence supérieure à 80 mm, de préférence supérieure à 100 mm, de préférence supérieure à 150 mm, et/ou jusqu'à une profondeur supérieure à 10 mm, à 20 mm, à 30 mm, à 40 mm, à 50 mm ou à 60 mm.

La portion adjacente présente de préférence une longueur supérieure à 20 mm, de préférence supérieure à 50 mm. De préférence encore, elle s'étend au moins jusqu'au bord inférieur et/ou jusqu'à l'altitude H.

L'écartement Δ entre la portion adjacente et le bord périphérique 22 du disque ouvreur peut être constant ou variable, entre un écartement minimal et un écartement maximal, selon la position angulaire du disque ouvreur autour de l'axe X en fonction de la forme du disque ouvreur. En particulier, lorsque le bord périphérique du disque ouvreur est circulaire, la portion adjacente est de préférence circulaire, d'axe X, de manière que ledit écartement Δ soit constant.

Lorsque le bord périphérique du disque ouvreur est crénelé, comme décrit ci-dessus, la portion adjacente est de préférence circulaire, d'axe X, de manière que ledit écartement soit constant sur au moins une partie dudit bord périphérique, de préférence sur plus de 20%, plus de 30%, de préférence plus de 40% de la longueur dudit bord périphérique.

L'écartement minimal, c'est-à-dire le plus petit écartement possible lorsque le disque ouvreur tourne autour de l'axe X, est inférieur à 50 mm, de préférence inférieur à 40 mm, de préférence inférieur à 20 mm, de préférence inférieur à 15 mm, de préférence inférieur à 10 mm, de préférence inférieur à 5 mm. De manière remarquable, un faible écartement minimal limite le risque d'un retour des débris végétaux ou de terre devant le disque ouvreur après le passage du bord de fuite.

De préférence, l'écartement minimal est cependant supérieur à 1 mm, de préférence supérieur à 3 mm, pour limiter le risque de bourrage par de la terre.

L'écartement maximal, c'est-à-dire le plus grand écartement Δ possible lorsque le disque ouvreur tourne autour de l'axe X, est de préférence inférieur à 70 mm, de préférence inférieur à 60 mm, de préférence inférieur à 50 mm, de préférence inférieur à 40 mm, de préférence inférieur à 30 mm. De préférence encore, la différence entre l'écart maximal est l'écart minimal est inférieure à 15 mm, de préférence inférieure à 10 mm, de préférence inférieure à 5 mm. Avantageusement, la lame chasse-débris 13 reste ainsi efficace sensiblement indépendamment de la position angulaire du disque ouvreur.

La lame chasse-débris 13 est de préférence pleine entre les bords d'attaque et de fuite, c'est-à-dire qu'elle ne comporte pas d'orifice traversant. Avantageusement, l'action d'écartement sur les débris végétaux au sol est donc continue lors du passage de la lame chasse-débris 13.

Pour limiter l'abrasion et réduire la consommation énergétique, la lame chasse-débris 13 est de préférence configurée pour que seule une portion du bord inférieur 15₃ frotte au fond de la fente superficielle. La longueur de cette portion est de préférence supérieure à 50%, à 70%, ou à 90% de la longueur du bord inférieur, de préférence représente sensiblement 100% de la longueur du bord inférieur. Une échancrure 23 peut être par exemple ménagée sur du bord inférieur 15₃, comme représenté sur la figure 2.

La lame chasse-débris 13 peut être solidarisée au support par tout moyen, par exemple au moyen d'un ou plusieurs bras de soutien 27, par exemple sous la forme d'une fourche, et de boulons. Le ou les bras de soutien 27 peuvent être rigidement fixés à une poutre, non représentée, qui porte le pivot autour duquel le disque ouvreur est monté à rotation (figures 2, 3, 6, 8) ou à une autre partie du support qui n'est pas rigidement solidaire de cette poutre (figure 4) .

De préférence, la position de la lame chasse-débris 13 selon la direction d'avancement et/ou selon la direction verticale est réglable. Comme illustré sur la figure 3 ou sur la figure 5, plusieurs orifices de boulons 25, ménagés dans la lame chasse-débris 13 et/ou dans le ou les bras de soutien peuvent être prévus à cet effet. Ces orifices peuvent en particulier être alignés verticalement et/ou horizontalement.

La lame chasse-débris 13 peut être fixée rigidement sur le support.

De préférence, la lame chasse-débris 13 est fixée sur le support de manière à être poussée élastiquement vers le sol et/ou vers le disque ouvreur, par exemple au moyen d'un organe de poussée élastique 29 interposé entre la lame chasse-débris 13 et le support, ou entre un bras de soutien 27 de la lame chasse-débris et une pièce du support 31 sur laquelle le bras de soutien 27 est monté à rotation, autour d'un axe horizontal, comme illustré sur la figure 7. Cette fixation élastique sur le support facilite avantageusement un échappement de la lame chasse-débris 13 lorsqu'elle heurte une pierre. Elle peut autoriser un mouvement de la lame chasse-débris 13 vers le haut et/ou un mouvement latéral, c'est-à-dire à l'écart du plan du disque ouvreur.

Lorsque la distance entre la portion du bord de fuite adjacente au bord périphérique 22 du disque ouvreur et l'axe X du disque ouvreur est susceptible de varier, comme dans le mode de réalisation de la figure 7, la distance d'écartement mentionnée dans la revendication 1, entre tout point de la portion du bord de fuite 15₂ et le bord périphérique du disque ouvreur, est mesurée dans une position de repos dans laquelle la distance entre la portion du bord de fuite adjacente au bord périphérique 22 du disque ouvreur et l'axe X du disque ouvreur est maximale.

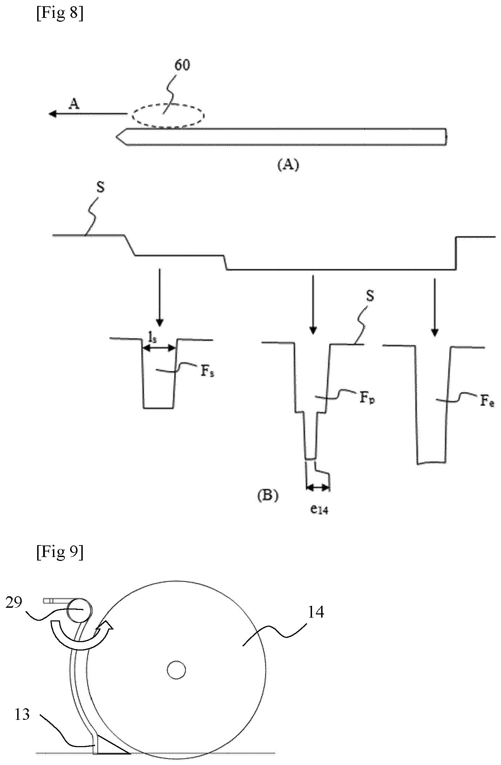

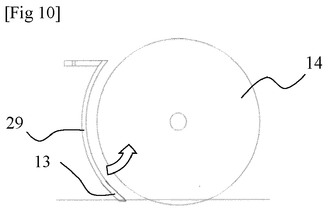

Dans la position extrême opposée, dans laquelle la distance entre la portion du bord de fuite adjacente au bord périphérique 22 du disque ouvreur et l'axe X du disque ouvreur est minimale, pour au moins une position angulaire du disque ouvreur autour de l'axe X, de préférence pour chaque position angulaire du disque ouvreur autour de l'axe X, la distance d'écartement mentionnée dans la revendication 1 est supérieure à 1 mm, de préférence supérieure à 3 mm ou 5 mm, et/ou inférieure à 20 mm, de préférence inférieure à 10 mm. L'organe de poussée élastique peut être par exemple un vérin, notamment hydraulique ou pneumatique, ou un ressort, en particulier un ressort hélicoïdal, à lame, comme sur la figure 10, ou « en queue de cochon », agissant en torsion, comme sur la figure 9. L'organe de poussée élastique peut agir en compression ou en traction, en fonction de sa fixation sur le support. Il est agencé pour autoriser un déplacement vertical et/ou latéral de la lame chasse-débris 13 et pour, dans la position de service, le presser élastiquement sur le sol et/ou vers le disque ouvreur. Sur les figures 9 et 10, la flèche symbolise l'action de poussée de l'organe de poussée élastique 29 sur la lame chasse débris 13 vers le disque ouvreur 14. Avantageusement, l'appui de la lame chasse-débris 13 sur le sol est maintenu même lorsque le semoir subit des secousses et/ou la lame chasse-débris 13 à la position de repos après que la lame chasse-débris a heurté une pierre. De préférence encore, la raideur de l'organe de poussée élastique est réglable.

La lame chasse-débris 13 peut être montée pivotante sur le support, de préférence autour d'un pivot d'axe horizontal transversal. De préférence, son poids est suffisant pour permettre son maintien contre le sol lorsque le semoir est tracté selon la direction d'avancement. Le pivot de la lame chasse-débris 13 est de préférence, suivant la direction d'avancement, devant le bord d'attaque de la lame chasse-débris 13.

De préférence, la lame chasse-débris comporte une butée, par exemple sous la forme d'une plaquette 33, qui s'étend face à une première grande face 34₁ du disque ouvreur de manière à prendre appui sur ladite grande face en cas de déformation excessive de la lame chasse-débris 13 perpendiculairement au plan de lame P₁₃, et à l'écart de la deuxième grande face 34₂ du disque ouvreur. En absence d'une telle déformation, la distance, mesurée selon l'axe X, entre la butée et la grande face est de préférence inférieure à 10 mm, de préférence inférieure à 5 mm, ou à 3 mm et/ou supérieure à 1 mm.

En particulier lorsque le plan de lame est confondu avec le plan de disque ouvreur, le support comporte de préférence des première et deuxième butées latérales, par exemple sous la forme de plaquettes 33, agencées pour limiter la déformation de la lame chasse-débris 13 perpendiculairement au plan de lame P₁₃, selon des premier et deuxième sens, respectivement.

De préférence, la ou les plaquettes 33 sont disposées pour être au-dessus du niveau du sol dans la position de service.

### Coutre

Le coutre 16 s'étend de préférence sensiblement verticalement.

Il présente de préférence une épaisseur supérieure à celle de la partie périphérique du disque ouvreur utilisée pour ménager la fente principale, voire supérieure à celle de la lame chasse-débris 13.

De préférence, l'épaisseur du coutre est supérieure à celle de la descente de semoir 18, ce qui protège la descente de semoir de l'abrasion. Cette épaisseur maximale, mesurée transversalement, est de préférence supérieure à 10 mm, de préférence supérieure à 12 mm, ou encore supérieure à 14 mm et/ou inférieure à 60 mm, de préférence inférieure à 40 mm, de préférence inférieure à 30 mm. Une telle épaisseur maximale est bien adaptée au dépôt des graines.

Le coutre 16 est de préférence conformé pour s'étendre jusqu'au fond de la fente principale dans la position de service.

Il peut être monté sur le support par l'intermédiaire d'un adaptateur fixé de manière détachable à un étançon 24 du support. Avantageusement, le coutre 16 peut être détaché du semoir sans avoir à détacher l'intégralité du support, ce qui permet la fixation de coutres de formes variées au support.

Le bord d'attaque du coutre, de préférence effilé, est de préférence incliné vers l'arrière, formant un angle β avec un plan transversal de préférence supérieur à 30°, à 40°, à 60° et/ou inférieur à 80°, à 70°. Le bord d'attaque du coutre peut être amovible. De préférence, il est renforcé par du carbure de tungstène.

### Descente de semoir

La descente de semoir 18, qui présente de préférence la forme générale d'un tube, débouche par une ouverture supérieure et par une ouverture inférieure. L'ouverture supérieure est destinée à être mise en communication avec une source du composé à déposer, par exemple un réservoir de graines ou de produit phytosanitaire (non représenté), qui peut être notamment solidaire de l'engin de traction ou du support 12. L'ouverture inférieure est destinée à être disposée dans la fente ménagée par la lame chasse-débris, approfondie par le disque ouvreur et de préférence élargie ou consolidée par le coutre 16.

Le diamètre équivalent de la descente de semoir est de préférence supérieur à 5 mm, de préférence supérieur à 8 mm, voire supérieur à 10 mm et/ou inférieur à 50 mm, de préférence inférieur à 40 mm, à 30 mm, de préférence inférieur à 25 mm.

### Roue de fermeture

La roue de fermeture 20, de préférence sensiblement verticale, est destinée à fermer la fente dans laquelle le composé a été déposé.

La roue de fermeture 20 est classiquement montée à rotation, de préférence libre, sur le support. Dans un mode de réalisation préféré, la roue de fermeture 20 est montée sur une suspension, par exemple comportant un vérin, notamment hydraulique ou pneumatique, ou un ressort. La suspension est de préférence conformée pour presser élastiquement la roue de fermeture 20 sur le sol.

La roue de fermeture 20 présente de préférence un diamètre supérieur à 10 cm, de préférence supérieur à 20 cm, de préférence supérieur à 25 cm, voire supérieur à 25 cm, supérieur à 50 cm, supérieur à 75 cm, supérieur à 90 cm, et/ou inférieur à 100 cm.

La largeur de la roue de fermeture 20, mesurée transversalement, est de préférence supérieure à 1 cm, de préférence supérieure à 2 cm, de préférence supérieure à 3 cm, de préférence encore supérieure à 4 cm, de préférence supérieure à 5 cm et /ou inférieure à 10 cm, de préférence inférieure à 8 cm.

### Fonctionnement

Le fonctionnement d'un semoir selon l'invention résulte directement de la description qui précède.

Le support est attaché, directement ou indirectement, à un tracteur, puis tiré sur le terrain à semer, selon la direction d'avancement A.

Le disque ouvreur 14 s'enfonce progressivement dans le sol jusqu'à ce que la ceinture limite cet enfoncement. Dans la position de service ainsi obtenue, la lame chasse-débris 13 est également en partie enfouie.

Lors de l'avancement du semoir, la lame chasse-débris 13 crée une fente superficielle Fₛ peu profonde, d'une largeur *ls,* et le disque ouvreur 14, dont l'épaisseur e₁₄ est inférieure à la largeur de la fente superficielle, fend le fond de la fente superficielle de manière à créer une fente principale Fₚ qui, sous le niveau du fond de la fente superficielle, est plus étroite que la fente superficielle (figure 8). La fente principale Fₚ obtenue est donc plus profonde que la fente superficielle. Le disque ouvreur 14 agit, sur le fond de la fente superficielle, à la manière d'une roulette à pizzas. Avantageusement, la terre n'a pas besoin d'être préparée. Le coutre 16, logé dans la fente principale, présente de préférence une épaisseur supérieure à la largeur de la fente principale. Il contribue donc à l'élargir et à la consolider, ce qui facilite le dépôt des graines au fond de la fente principale.

Des graines G sont alors progressivement semées dans la fente principale élargie par le coutre Fe, par l'intermédiaire de la descente de semoir 26.

Des débris végétaux 60 (symbolisés par un ovale en trait interrompu sur la figure 8) peuvent cependant venir joncher le sol, devant le semoir. Ces débris végétaux sont cependant écartés sur les côtés du semoir par la lame chasse-débris 13, après avoir été optionnellement déterrés grâce à l'inclinaison du bord d'attaque de la lame chasse-débris 13. Ils sont avantageusement maintenus écartés du plan du disque ouvreur pendant tout le passage de la lame chasse-débris 13, la lame chasse-débris 13 ne comportant pas de trous traversant entre les bords d'attaque et de fuite.

Le faible écartement entre le bord de fuite et le bord périphérique du disque ouvreur limite, voire évite en outre le retour des débris végétaux entre ces deux bords. Le disque ouvreur fend ainsi la terre sans être gêné par les débris végétaux écartés.

La mise en œuvre d'une lame chasse-débris selon l'invention est simple et peu coûteuse. Elle ne bouleverse par la terre devant le disque ouvreur. La profondeur à laquelle elle s'enfonce dans le sol est réduite au regard de la profondeur de la fente principale, ce qui limite encore les mouvements de terre et réduit la consommation énergétique.

Si la lame chasse-débris est montée suspendue sur le support, elle peut avantageusement remonter lorsqu'elle heurte un obstacle, par exemple une pierre. Si un obstacle tend à écarter latéralement la lame chasse-débris pour l'écarter du plan du disque ouvreur, elle se déforme jusqu'à ce qu'au moins une plaquette 33 entre en butée avec le disque ouvreur, de manière à entraver ladite déformation.

Après qu'une graine a été déposée dans la fente principale, la roue de fermeture 20 vient enfin rouler sur la fente pour la refermer.

Des essais ont montré qu'un semoir selon l'invention écarte efficacement les débris végétaux devant le disque ouvreur. Il laisse derrière lui une surface sensiblement plane, dans laquelle la fente est bien refermée, ce qui évite que les oiseaux ne mangent les graines semées et facilite la germination.

Bien entendu, l'invention n'est pas limitée aux modes de réalisation décrits et représentés, fournis à des fins illustratives seulement.

## Revendications

1. Semoir comportant :
- un support (12) ;
- une lame chasse-débris (13) montée sur le support et conformée pour ménager dans le sol (S), lorsque, dans une position de service, le support est tracté sur le sol (S) par un engin agricole selon une direction d'avancement (A), une fente superficielle (Fₛ) présentant une largeur (ls) inférieure à 20 mm ;
- un disque ouvreur (14) s'étendant dans un plan de disque ouvreur (P₁₄), monté à rotation sur le support autour d'un axe X et conformé pour approfondir ladite fente superficielle (Fₛ) ;
- une descente de semoir (18) rigidement fixée sur le support et débouchant vers ou dans la fente superficielle approfondie par le disque ouvreur (14) ; semoir dans lequel la lame chasse-débris (13) comporte un bord d'attaque (15a), un bord de fuite (15₂) et un bord inférieur (15₃) reliant le bord d'attaque et le bord de fuite, le bord de fuite (15₂) comportant une portion adjacente au bord périphérique du disque ouvreur et qui, en tout point le long de ladite portion adjacente (15b) est, dans au moins une position angulaire du disque ouvreur, écartée du bord périphérique du disque ouvreur, d'une distance (Δ) inférieure à 70 mm.

2. Semoir selon la revendication précédente, dans lequel ladite distance (Δ) est inférieure à 20 mm.

3. Semoir selon l'une quelconque des revendications précédentes, dans lequel la portion adjacente (15_{b}) s'étend sur un secteur angulaire (Ω), autour de l'axe X, supérieur à 10°.

4. Semoir selon l'une quelconque des revendications précédentes, dans lequel la portion adjacente (15_{b}) s'étend, dans la position de service, en partie au dessus et en partie en dessous du niveau du sol.

5. Semoir selon l'une quelconque des revendications précédentes, dans lequel le disque ouvreur présente une épaisseur (e₁₄) inférieure à 0,9 fois la largeur (ls) de la fente superficielle ménagée par la lame chasse-débris (13).

6. Semoir selon l'une quelconque des revendications précédentes, comportant une butée (33), rigidement solidaire de la lame chasse-débris (13), de préférence disposée de manière à être au-dessus du niveau du sol dans la position de service, ladite butée s'étendant face à une grande face du disque ouvreur, à une distance de ladite grande face inférieure à 5 mm.

7. Semoir selon l'une quelconque des revendications précédentes, dans lequel la lame chasse-débris présente, au moins entre le bord d'attaque (15a) et ladite portion adjacente (15_{b}), la forme d'une plaque dépourvue d'orifice traversant.

8. Semoir selon l'une quelconque des revendications précédentes, dans lequel le bord inférieur (15₃) est conformé pour que, dans la position de service, moins de 50% de la longueur du bord inférieur soit en contact avec le fond de la fente superficielle.

9. Semoir selon l'une quelconque des revendications précédentes, dans lequel la lame chasse-débris (13) s'étend dans un plan de lame (P₁₃) formant avec le plan de disque ouvreur (P₁₄) un angle β supérieur à 2° et inférieur à 30°.

10. Semoir selon l'une quelconque des revendications précédentes, dans lequel le disque ouvreur et la lame chasse-débris sont montés sur un même bras de soutien (27) du support (12).

11. Semoir selon l'une quelconque des revendications précédentes, dans lequel la lame chasse-débris (13) est fixée rigidement sur le support ou est montée mobile sur le support de manière à exercer un appui sur le sol dans la position de service.

12. Semoir selon l'une quelconque des revendications précédentes, dans lequel la position de la lame chasse-débris (13) est réglable selon la direction d'avancement et/ou perpendiculairement à la direction d'avancement.

13. Semoir selon l'une quelconque des revendications précédentes, dans lequel, dans la position de service, le bord d'attaque (15a) est incliné vers l'arrière, formant un angle δ avec un plan horizontal supérieur à 5°.

14. Semoir selon l'une quelconque des revendications précédentes, comportant un organe de poussée élastique (29) disposé de manière à pousser élastiquement la lame chasse-débris 13 vers le sol et/ou vers le disque ouvreur.
